(19) Europäisches Patentamt
European Patent Office
Office européen des brevets

(11) **EP 4 235 398 A1**

(12) **EUROPEAN PATENT APPLICATION**

(43) Date of publication:
**30.08.2023 Bulletin 2023/35**

(21) Application number: **22382166.1**

(22) Date of filing: **25.02.2022**

(51) International Patent Classification (IPC):
**G06F 7/544** (2006.01)　　**G06N 3/063** (2023.01)

(52) Cooperative Patent Classification (CPC):
**G06F 7/544;** G06N 3/065

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universidade de Santiago de Compostela**
**15782 Santiago de Compostela (La Coruña) (ES)**

(72) Inventors:
• **García Lesta, Daniel**
**Santiago de Compostela (ES)**

• **Pardo Seco, Fernando Rafael**
**Santiago de Compostela (ES)**
• **Pereira Rial, Óscar**
**Santiago de Compostela (ES)**
• **López Martínez, Paula**
**Santiago de Compostela (ES)**
• **Cabello Ferrer, Diego**
**Santiago de Compostela (ES)**
• **Brea Sánchez, Víctor Manuel**
**Santiago de Compostela (ES)**

(74) Representative: **Balder IP Law, S.L.**
**Paseo de la Castellana 93**
**5ª planta**
**28046 Madrid (ES)**

(54) **HYPERDIMENSIONAL MIXED-SIGNAL PROCESSOR**

(57)　　A device for hyperdimensional computing comprising: an array of $m$ x $n$ 1-bit processing units; each processing unit comprising a 1-bit logic unit and a memory unit; at least one input terminal for receiving an input hypervector; $n$ 1-bit multiplexers for selecting: the input of a processing unit in the first row, the input of a processing unit of the last row or the input of the at least one input terminal; wherein the array is arranged such that each processing unit is connected to its four nearest neighboring processing units, where: one neighboring processing unit for each processing unit of the first row of the array is the processing unit of the last row sharing the same column of the array; one neighboring processing unit for each processing unit of the last column of the array is the processing unit of the first column and next row; one neighboring processing unit for the processing unit at position $m$ x $n$ is the processing unit at position $1\times1$. Also, methods for manufacturing and using the device.

**FIGURE 1**

**Description**

**TECHNICAL FIELD OF THE INVENTION**

The invention relates to hardware systems for hyperdimensional computing (HDC) tasks, more precisely the invention relates to a multiprocessor mixed-signal hardware architecture to perform HDC tasks.

**BACKGROUND**

Hyperdimensional computing (HDC) is a brain-inspired computing paradigm built on vectors in the thousands of dimensions to represent data. In the last years, HDC has addressed classification problems, showing promising results compared to state-of-the-art deep learning algorithms. HDC computing involves simple operations, which makes it suitable for low-power hardware implementations.

As mentioned above, HDC is a brain-inspired computing paradigm in which low-dimensional data, such as, image features, signal values, data text etc., are mapped into a vector with e.g. thousands of components. In this way, the information contained in the low-dimensional data is spread along the components. The mapping into a hyperdimensional vector (HD-vector or HDV) is made through a hyperdimensional encoder (HD encoder) that provides e.g. the holistic representation of the low-dimensional data, assigning orthogonal HDVs to dissimilar low-dimensional inputs. The use of associative memory (AM), as for instance explained in P. Kanerva, "Hyperdimensional computing: An introduction to computing in distributed representation with high-dimensional random vectors," Cognitive computation, vol. 1, no. 2, pp. 139-159, 2009, wherein the data is retrieved by comparing a query HDV with memory data content, is also a key component of HDC classification algorithms. HDC comprises three basic primitives, i.e., binding, bundling and permutation. Binding two binary HDVs, $V_1$ and $V_2$ generates a dissimilar HDV, i.e. an HDV orthogonal to $V_1$ and $V_2$. Binary HDV binding is carried out with a bit-wise XOR Boolean gate between two HDC vectors $V_1$ and $V_2$:

$$V_1 \quad = 0\ 1\ 0\ 1\ 0\ 0\ ...\ 0\ 0$$

$$V_2 \quad = 1\ 1\ 0\ 1\ 1\ 0\ ...\ 1\ 0$$

$$\text{-------------------------------------}$$

$$V_1 * V_2 = 1\ 0\ 0\ 0\ 1\ 0\ ...\ 1\ 0$$

The second basic operation is bundling of two or more HDVs, which is run during on-line training to generate a class vector representing the complete set of HDVs in the class. In the case of binary HDVs, bundling is implemented with the majority rule, which is a bit-wise function that assigns the most frequent logic value for a given bit position among the input HDVs to the corresponding bit position in the output HDV, as shown in the following example:

$$V_1 = 0\ 1\ 0\ 1\ 0\ 0\ ...\ 0\ 0$$

$$V_2 = 1\ 1\ 0\ 1\ 1\ 0\ ...\ 1\ 0$$

$$V_3 = 0\ 0\ 1\ 0\ 0\ 1\ ...\ 0\ 1$$

$$V_4 = 1\ 1\ 1\ 1\ 0\ 0\ ...\ 1\ 0$$

$$\text{------------------------------------------------------------}$$

$$V_1 + V_2 + V_3 + V_4 = 1\ 1\ 0\ 1\ 0\ 0\ ...\ 1\ 0$$

The last operation is permutation, which rotates the components of the HDV by a given number of positions suitable for encoding several HDVs into a meaningful HDV for classification tasks. The classification process is carried out by comparing query HDVs with those stored in an associative memory (AM) through e.g. Hamming distance (HD):

$$HD = \sum_{i=0}^{N} V_1(i) \, xor \, V_{am}(i)$$

where N is the number of components of the HDV, $V_1$ is the query HDV and $V_{am}$ is the HDV read from the AM which represents a class. The $V_{am}$ HDV with the minimum Hamming distance gives the class of $V_1$ HDV.

Binding and bundling include operations between the same components of the HDV, whereas permutation and Hamming distance calculation involve operations between different HDV components.

HDC hardware systems developed until now performs the operations of majority rule and Hamming distance calculation by means of digital circuitries, leading to consuming area and power designs as inter alia described in A. Rahimi, S. Datta, D. Kleyko, E. P. Frady, B. Olshausen, P. Kanerva, and J. M. Rabaey, "High-dimensional computing as a nanoscalable paradigm," IEEE Transactions on Circuits and Systems I: Regular Papers, vol. 64, no. 9, pp. 2508-2521, 2017, and M. Schmuck, L. Benini, and A. Rahimi, "Hardware optimizations of dense binary hyperdimensional computing: Rematerialization of hypervectors, binarized bundling, and combinational associative memory," J. Emerg. Technol. Comput. Syst., vol. 15, Oct. 2019.

Mika Laiho, Jussi H. Poikonen, Pentti Kanerva, Eero Lehtonen. High-Dimensional Computing with Sparse Vectors. IEEE Biomedical Circuits and Systems Conference, 2015 presents an architecture wherein sparse HDV are chopped into segments to perform permutations. However, the associative memory is still a global memory, presenting the same drawbacks of mentioned works.

There is interest in providing HDC processing with reduced power and area consumption.

## DESCRIPTION OF THE INVENTION

To overcome limitations of HDC hardware implementations as described above, the present disclosure provides a mixed-signal architecture to implement an HDC hardware processor. The disclosure tackles with the requirements of low power and area consumption of HDC processor for classifications or inference tasks.

A first aspect of the disclosure relates to a device comprising $m \times n$ 1-bit processing units (PUs), where each of $m$ and $n$ is a natural number equal to or greater than 2. Each of the processing units (PUs) includes a memory unit, preferably an associative memory, and each PU is locally connected to its four nearest neighboring PUs through respective communication buses. The nearest neighboring PUs are usually the PUs directly adjacent to the respective PU, at north, east, west and south from the respective PU. For PUs at the first row, first column, last row and/or last column, one or two neighboring PUs are not directly adjacent but are on the opposite row and/or column, particularly: each PU of the first row is locally connected to the PU of the same column in the last row (e.g. the PU at position $1 \times 3$ is connected to the PU at position $m \times 3$; it is noted that here the first row is identified with index 1, but it could likewise be identified with index 0, and that the last row is identified with index $m$, but it could likewise be identified with index $m - 1$, the same applies to row IDs); each PU of the last column is locally connected to the PU in the next row and in the first column (e.g. the PU at position $2 \times n$ is connected to the PU at position $3 \times 1$), and the last PU is connected to the first PU (i.e. the PU at $m \times n$ is connected to the PU at $1 \times 1$).

The device further comprises a plurality of multiplexers, particularly one multiplexer per column. Each such multiplexer has its output port connected to a different PU of the last row, and has two input ports, one of which is connected to the PU of the first row sharing the column of the PU of the output, and one input terminal of the device; hence, the multiplexers are 1-bit multiplexers. With the use of multiplexers at the bottom row it is possible to introduce $n$ coming from outside the device, via at least one input terminal of the device, into the array of PUs (also referred to, hereinafter, as hyperprocessor or HDC processor). These data can then be moved into the next row in the same clock cycle as a new stream of $n$ bits is inserted into the bottom row. With this, the hyperprocessor will be loaded with the desired hypervector after $m$ clock cycles at most. The same strategy can be used to read out a stored hypervector from the first row.

It will be noted that although the terms rows and columns are used, these shall not be understood in a limiting manner. In this sense, columns may be horizontal and rows vertical. In fact, by rotating the array or device 90° clockwise or counterclockwise, the $m \times n$ array can be seen as becoming an $n \times m$ array. It will also be noted that terms such as first and last rows and columns are also subject to how the array or device is being inspected; a 180° rotation or a mirroring of the array or device will result in the same arrangement but with the first row being the last row, the first column being the last column and vice versa, An array or device with all these possible interpretations also fall within the scope of the present disclosure.

The device solves two problems present in the architectures and systems of other devices as described at the beginning. First, a memory unit, i.e. local memory, in each PU implements the associative memory needed in HDC algorithms for inference tasks, which makes in-PU operations faster than its off-PU memory counterpart; in this sense, the memory of each PU reduces data flow as results from the processing need only to be stored in memory once and not twice (e.g. processor registers for a majority rule do not need to be stored again in a memory since the memory of the PU is an input for the majority rule; and/or profile vectors in processor registers can be loaded in parallel when computing Hamming distance with respect to a query vector) and, therefore, power consumption, and increases speed as each PU has its own memory. Second, the mixed-mode architecture simplifies the HDC operations of e.g. majority rule and Hamming distance calculation by means of analog circuitry, leading to less area than fully digital implementations.

As aforesaid, the hyperprocessor of the device consists in $m$ times $n$ PUs distributed in an $m \times n$ array, where all of the PUs receive the same control signals, from e.g. a controlling circuitry or unit within the device, or from outside the device via one or more input terminals of the device, with Single Instruction Multiple Data (SIMD) processing. A possible application of the PU's 4-connectivity is the data input/output to the HDC processor through the plurality of multiplexers.

Every PU has local processing capabilities through a 1-bit logic unit (LU), which can be regarded as an arithmetic logic unit as it can perform 1-bit arithmetic operations, and it is connected to its four nearest neighbors as described above, following an x-y torus architecture. This scheme allows to move data along both perpendicular axes, e.g. horizontal and vertical axes, which can be used to perform different operations involved in HDC. For instance, one of the possible operations is circular shifts in both directions, widely used in common hyperdimensional computing algorithms, thanks to the connection of the last PU in each row with the first one in the next row. Also, connectivity in the y axis permits to implement random shifts faster than with only communication in the x axis.

Each PU's local memory stores the local components of the corresponding hypervectors. Thus, the LU and the local memory allow to run any digital function, and therefore HDC operations, provided the correct sequence of control signals.

Preferably, each PU includes all the circuitry required for common hyperdimensional computing operations. To this end, each PU comprises one or more analogs circuits to perform majority rule and Hamming distance operations.

In some embodiments, $m$ times $n$ is equal to or greater than 1000 (or 1024 if $m$ and $n$ are powers of two, which is preferable since that takes full advantage of the electronics of the device). However, as it will be apparent to the skilled person, $m$ times $n$ is typically larger in HDC, as it can be in the order of thousands, tens of thousands or even larger, and the device of the present disclosure is configured to perform HDC with values of $m$ times $n$ of e.g. 4096 or greater, 8192, or even greater. In this sense, $m$ times $n$ should be equal to or greater than a dimensionality of an input hypervector. For instance, in some embodiments, $m$ or $n$ is 128 and the other one of $m$ and $n$ is 64.

In some embodiments, the LU of each PU is implemented with a logic gate. For example, a NOR gate or a NAND gate, which provides functional completeness. The logic gate preferably has latched inputs and tristate output connected to the PU's own communication bus, or to any of the communication buses of its nearest four neighbors.

In some embodiments, the latches' inputs collect data from the bus either as they are or as an inverted version thereof, in the latter each logic gate comprises an inverter and a multiplexer.

In some embodiments, the local memory is a SRAM memory. Communication between PUs is carried out through the tri-state buffers driven by the logic gate, e.g. NOR gate, NAND gate. Each of them is connected to one neighbor's bus. Directions east and west are used for one position circular shifts by enabling their corresponding buffers. When that occurs, its selected neighbor bus will be loaded with the logic gate's output, which can be then written into a processor latch or to neighbor's local memory. All the information across the PUs is shared through a common 1-bit bus, connected to functional blocks like the logic unit, the majority rule circuit and an output block in current mode.

In some embodiments, the memory unit of each PU comprises a SRAM memory.

Each SRAM's column and row may receive a control signal from e.g. a controlling circuitry or unit within the device, or from outside the device via one or more input terminals of the device, in a one-hot format, in which case use of PU-level decoders (if any) can be avoided, otherwise control signals may require decoders to convert encoded words into a plurality of signals for control. As each PU is a 1-bit processor, only 1 bit can be written or read per clock cycle.

Additionally, some bits, columns or rows of the memory may serve to a double purpose. The first one is to hold general information as the other bits of the memory, and the second one is to buffer the input to the majority rule block when provided.

In some embodiments, each processing unit comprises an analog circuit for majority rule computation and an analog circuit for Hamming distance computation. The provision of an analog circuit for majority rule computation simplifies the needed circuitry compared to a completely digital implementation.

To calculate the result of the majority rule on a set of $n$ hypervectors, the majority rule block writes the stored values from the memory units. In the embodiments in which the memory units comprise SRAM, the majority rule block writes the stored values from the SRAM memory into a plurality of capacitors through transistors. The capacitors preferably have a linear response or a response as linear as possible, in this sense the capacitors can be e.g. Metal-insulator-Metal (MiM); with non-linear response, the accuracy of e.g. the majority rule operations becomes lower and, thus, the result of the processing can become incorrect.

One common operation in hyperdimensional computing is Hamming distance between two hypervectors to find the closest profile to a query hypervector. Accordingly, the analog circuitry to this end also enables the performance of this operation in a simple manner. One possible way would be to execute the XOR operation between each component of the hypervector at each PU and send the resultant hypervector to digital circuitry located within the device at the periphery of the hyperprocessor to count the number of ones.

In some embodiments, the device is configured to receive one or more input hypervectors, process the hypervector(s) and output a result. The device can be used for e.g. image and video classification, EGM signal processing, text recognition, etc. For example, but without limitation, in some embodiments, the device is configured to receive and process one or more input hypervectors corresponding to a digital image or frame of a digital video, and output data indicative of one or more objects present in the digital image or frame.

A second aspect of the disclosure relates to a method for manufacturing a device for hyperdimensional computing, comprising: arranging a plurality of 1-bit processing units forming an $m$ x $n$ array, $m$ and $n$ each being a natural number equal to or greater than 2; arranging a plurality of $n$ 1-bit multiplexers; connecting each processing unit to its four nearest neighboring processing units with the proviso of: one neighboring processing unit for each processing unit of the first row of the array being the processing unit of the last row sharing the same column of the array; one neighboring processing unit for each processing unit of the last column of the array is the processing unit of the first column and next row; and one neighboring processing unit for the processing unit at position $m$ x $n$ is the processing unit at position $1 \times 1$; connecting an output of each 1-bit multiplexer to a different processing unit of the first row of the array; and connecting a first input of each 1-bit multiplexer to the processing unit of the last row having a same column as the processing unit connected to the output, and a second input of each 1-bit multiplexer to an input terminal of the device. Input terminals enable the communication of the device with other devices by way of electrical connections.

In some embodiments, the device manufactured is a device according to the first aspect of the disclosure.

A third aspect of the disclosure relates to a method of using a device according to the first aspect of the disclosure or a device manufactured with the method of the second aspect of the disclosure.

In some embodiments, the method comprises: receiving, at the device, one or more hypervectors corresponding to a digital image or frame of a digital video; processing the one or more hypervectors at the device; and outputting, at the device, data indicative of one or more objects present in the digital image or frame. The one or more hypervectors can be received through the one or more input terminals of the device.

## BRIEF DESCRIPTION OF THE DRAWINGS

Detailed modes in the Figures are illustrated by way of example and not by way of limitation:

Figures 1 and 2 show the I/O scheme and system architecture of HDC processors in accordance with embodiments.
Figure 3 shows a PU of an HDC processor in accordance with embodiments.
Figure 4 shows a circuitry to implement the majority rule operation in processing units of a device in accordance with embodiments.

## DETAILED DESCRIPTION

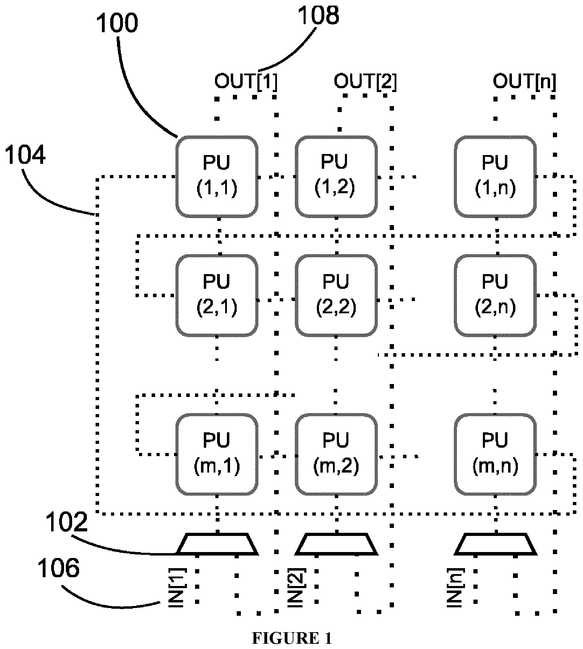

Figure 1 shows a hyperprocessor of a device for hyperdimensional computing in accordance with embodiments.

The hyperprocessor includes a plurality of processing units 100 arranged in an $m \times n$ array or matrix. All processing units 100 are arranged on e.g. one or more integrated circuits. A position of each PU 100 within the array or matrix is shown inside the PU for illustrative purposes only.

Each PU 100 is connected to its four directly adjacent PUs 100 with data buses 104. Adjacency can be regarded as the PUs at north, east, west and south of any given PU 100, where each of these coordinates is regarded in terms of the position of the PUs 100 in the array or matrix. However, and as represented in Figure 1, one of the four directly adjacent PUs 100 for the PUs 100 at the first row is the PU 100 of the same column but at the bottom row. Likewise, one of the four directly adjacent PUs 100 for the PUs 100 at the last column is the PU 100 in the first column but of the next row; in the case of the last PU 100, the next row is considered to be the first row.

The hyperprocessor also includes as many multiplexers 102 as columns in the array or matrix are. Each multiplexer 102 is connected with the PUs 100 of both the first and last rows and of the same column; the connection with the PU 100 of the first row is as an output 108 of the respective multiplexer 102, and the connection with the PU 100 of the last row is as an input 106 of the respective multiplexer 102. Additionally, each multiplexer 102 has as an input 106 directly or indirectly connected with an input terminal of the device so that it can receive input hypervectors. With the plurality of multiplexers 102, the hyperprocessor can receive $n$ bits per clock cycle, and output $n$ bits per clock cycle.

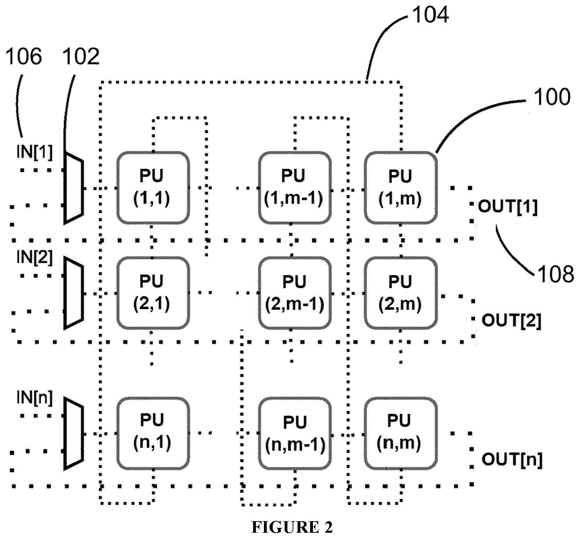

As it will be appreciated, the hyperprocessor represented in Figure 1 could likewise be rotated or mirrored, thereby altering the visual layout of the elements shown therein but still maintaining the same arrangement between elements. For example, the hyperprocessor could be rotated 90° like in Figure 2.

Figure 2 shows a hyperprocessor of a device for hyperdimensional computing in accordance with embodiments.

In this example, the hyperprocessor includes a plurality of processing units 100 arranged in an $m \times n$ array or matrix, with $m$ horizontal columns arranged and $n$ vertical rows. The same explanations provided with reference to the embodiments of Figure 1 likewise apply to the embodiments of Figure 2.

Alternatively, the same hyperprocessor could be defined as having an $n \times m$ array or matrix, with $n$ horizontal rows and $m$ vertical columns. In that case, the number of multiplexers would be $n$ and the connections between PUs 100 would be following the scheme illustrated in Figure 2 as well.

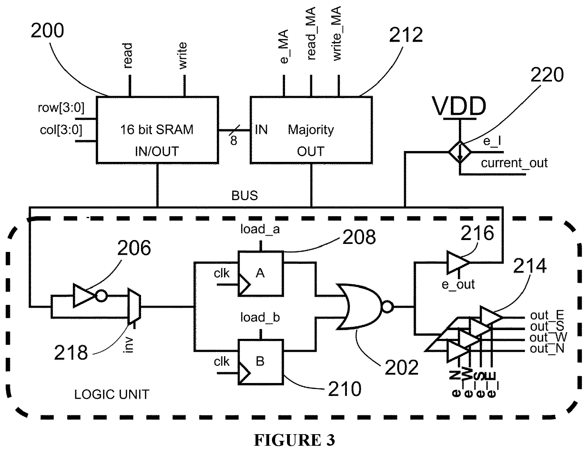

Figure 3 shows a processing unit, like one processing unit 100 of any one of Figures 1 and 2, of a device in accordance with some embodiments.

The processing unit includes a memory unit 200, in this example a 16-bit SRAM memory although it will be readily apparent that other types and sizes of memories are possible without departing from the scope of the present disclosure.

The memory unit 200 is connected to both an analog circuit for majority rule computation 212 and own data bus 216. The data bus 216 is connected to a logic unit 204, and a controlled current source 220.

In this example, the logic unit 204 includes a logic gate 202 in the form of a NOR gate, but a different gate could be used instead, like e.g. a NAND gate. The logic gate 202 includes latched inputs 208, 210 and a tristate output connected to the data bus 216, or through outputs 214 (where N, E, W and S denote north, east, west and south) to any of the buses of the four adjacent PUs 100 as described, for example, with reference to Figure 1. The inputs 208, 210 can collect data from the bus either as they are or their inverted version with owing to an inverter 206 and a multiplexer 218.

To avoid additional digital block and the movement of all the data from the hyperprocessor to the periphery of the hyperprocessor when performing Hamming distance computations, which would increase area, processing time and energy consumption of the device, the following is carried out in some embodiments. The Hamming distance operation is provided by adding a current source 220 with an e.g. NMOS transistor biased with a current mirror to obtain a current proportional to the number of ones after the XOR operation is executed. This current source enables transistors controlled by the control signal e I and by the BUS voltage, and it has its output connected to a column bus that gathers the current from all PUs of a column. These column buses are also connected between them, summing up all the currents from the array of PUs. Thus, after the XOR operation this current source is enabled and only those where the result was one will add its current.

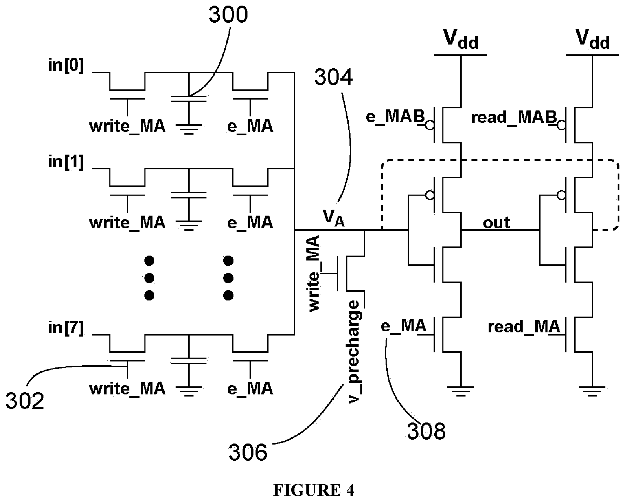

Figure 4 shows a circuitry, like circuitry 212 of Figure 3, to implement the majority rule operation in processing units of a device in accordance with embodiments.

The majority rule can be computed on a set of e.g. $p$ hypervectors. The value of $p$, which is a natural number, is less than a size $k$ of the memory unit, so $p < k$; for instance, $p$ is 8 when the size of the memory unit is 16 bits. The value of $p$ is equal to a number of capacitors 300.

The majority rule block writes stored values from the memory unit into the capacitors 300 through transistors 302, like e.g. NMOS transistors, using signal write_MA. At the same time, a node $V_A$ 304 is charged to precharge voltage v_precharge 306 to improve circuit's yield by loading a parasitic input capacitance of a first inverter with a selected voltage; the first inverter is the pair of e.g. NMOS and PMOS transistors controlled by the e_MA and e_MAB signals. This voltage can be used also for biasing the output value, which is useful to decide the tie case outcome (same number of ones and zeros). After the input is written to the capacitors 300, they are all shorted with signal e_MA 308 and their average value stored at node $V_A$ 304. In addition, the first tri-state inverter is activated, setting the output to the inverted desired output. This inverter is used as a comparator; the inverter may cope with the effect of non-ideal switches implemented with e.g. NMOS transistors. In some embodiments, due to threshold voltages of the switches, the switches may shift down logic ' 1' representation from a high voltage, e.g. 1.8 V, to a lower voltage. At is will be apparent for the skilled person, the thresholds may have to be set up to account for these variations. Finally, to circumvent the low gain of the first inverter caused by the threshold voltage modification, a second tri-state inverter is preferably added with feedback loop to $V_A$ 304, which is turned on with the read MA signal after out signal is settled.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. A device for hyperdimensional computing comprising:

   a. an array of $m \times n$ 1-bit processing units (100) arranged in $m$ rows and $n$ columns, wherein each of $m$ and $n$ is a natural number equal to or greater than 2;
   b. each processing unit (100) comprising a 1-bit logic unit and a memory unit;
   c. at least one input terminal for receiving an input hypervector;
   d. $n$ 1-bit multiplexers (102) for selecting: the input of a processing unit (100) in the first row, the input of a processing unit (100) of the last row or the input of the at least one input terminal;
   wherein the array is arranged such that each processing unit is connected to its four nearest neighboring processing units, where:

   one neighboring processing unit for each processing unit (100) of the first row of the array is the processing unit of the last row sharing the same column of the array;
   one neighboring processing unit for each processing unit (100) of the last column of the array is the processing unit of the first column and next row;
   one neighboring processing unit for the processing unit (100) at position $m \times n$ is the processing unit at position $1 \times 1$.

2. The device according to claim 1, wherein each processing unit (100) further comprises:

   a. an analog circuit for majority-rule computation (212); and
   b. an analog circuit for Hamming distance computation.

3. The device according to claim 2, wherein the analog circuit for majority-rule computation of each processing unit (100) comprises:

   a. a plurality of capacitors (300) that store components of a hyperdimensional vector on which a majority rule is calculated;
   b. control elements (302) for charging a component of the hyperdimensional vector from the memory unit in the corresponding capacitor (300); and
   c. a precharge element (306) for charging a node (304) where the plurality of capacitors (300) is connected for biasing output result a majority tie case.

4. The device according to any one of the preceding claims, wherein the logic unit of each processing unit (100) comprises:

   a. a logic gate (202) with latched inputs (208, 220);
   b. a tristate output connected to a bus (216) of the processing unit (100); and
   c. buffers for each connection with one of the four nearest neighboring processing units.

5. The device according to claim 4, wherein the logic gate (202) of each logic unit is a NOR gate.

6. The device according to claim 4, wherein the logic gate (202) of each logic unit is a NAND gate.

7. The device according to any one of the preceding claims, wherein the memory unit of each processing unit (100) is an SRAM memory.

8. The device according to any one of the preceding claims, wherein $m$ times $n$ is equal to or greater than 1024.

9. The device according to claim 8, wherein $m$ times $n$ is equal to or greater than 8196.

10. The device according to any one of the preceding claims, wherein the device is configured to receive and process one or more input hypervectors corresponding to a digital image or frame of a digital video, and further configured to output data indicative of one or more objects present in the digital image or frame.

11. The device according to any one of the preceding claims, wherein the rows are horizontal rows and the columns are vertical columns.

12. The device according to any one of claims 1-10, wherein the rows are vertical rows and the columns are horizontal columns.

13. A method for manufacturing a device for hyperdimensional computing, comprising:

arranging a plurality of 1-bit processing units forming an $m$ x $n$ array, with $m$ and $n$ each being a natural number equal to or greater than 2;
arranging a plurality of $n$ 1-bit multiplexers;
connecting each processing unit to its four nearest neighboring processing units with the proviso of:

one neighboring processing unit for each processing unit of the first row of the array being the processing unit of the last row sharing the same column of the array;
one neighboring processing unit for each processing unit of the last column of the array is the processing unit of the first column and next row; and
one neighboring processing unit for the processing unit at position $m \times n$ is the processing unit at position $1 \times 1$;

connecting an output of each 1-bit multiplexer to a different processing unit of the first row of the array; and
connecting a first input of each 1-bit multiplexer to the processing unit of the last row having a same column as the processing unit connected to the output, and a second input of each 1-bit multiplexer to an input terminal of the device.

14. The method according to claim 13, wherein the device is a device according to any one of claims 1-12.

15. A method of using a device according to any one of claims 1-12, comprising:

receiving, at the device, one or more hypervectors corresponding to a digital image or frame of a digital video;
processing the one or more hypervectors at the device; and
outputting, at the device, data indicative of one or more objects present in the digital image or frame.

FIGURE 1

FIGURE 2

FIGURE 3

**FIGURE 4**

EP 4 235 398 A1

Europäisches Patentamt
European Patent Office
Office européen des brevets

# EUROPEAN SEARCH REPORT

Application Number

EP 22 38 2166

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/310311 A1 (SHI CONG [CN] ET AL) 29 October 2015 (2015-10-29) * paragraph [0029] - paragraph [0063]; figures 1, 3 * | 1-15 | INV. G06F7/544 G06N3/063 |
| A | US 2012/326749 A1 (O'CONNOR IAN [FR] ET AL) 27 December 2012 (2012-12-27) * paragraph [0064] - paragraph [0119]; figures 1, 2 * | 1-15 | |
| A | EGGIMANN MANUEL ET AL: "A 5 [mu]W Standard Cell Memory-Based Configurable Hyperdimensional Computing Accelerator for Always-on Smart Sensing", IEEE TRANSACTIONS ON CIRCUITS AND SYSTEMS I: REGULAR PAPERS, IEEE, US, vol. 68, no. 10, 3 August 2021 (2021-08-03), pages 4116-4128, XP011880028, ISSN: 1549-8328, DOI: 10.1109/TCSI.2021.3100266 [retrieved on 2021-09-27] * section III; figures 1, 4 * | 1-15 | TECHNICAL FIELDS SEARCHED (IPC) G06F |

The present search report has been drawn up for all claims

| Place of search | Date of completion of the search | Examiner |
|---|---|---|
| Munich | 28 July 2022 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2166

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2022

| Patent document cited in search report | | Publication date | Patent family member(s) | | Publication date |
|---|---|---|---|---|---|
| US 2015310311 | A1 | 29-10-2015 | US 2015310311 | A1 | 29-10-2015 |
| | | | WO 2014085975 | A1 | 12-06-2014 |
| US 2012326749 | A1 | 27-12-2012 | EP 2514096 | A1 | 24-10-2012 |
| | | | FR 2954023 | A1 | 17-06-2011 |
| | | | JP 2013514025 | A | 22-04-2013 |
| | | | US 2012326749 | A1 | 27-12-2012 |
| | | | WO 2011080452 | A1 | 07-07-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. KANERVA.** Hyperdimensional computing: An introduction to computing in distributed representation with high-dimensional random vectors. *Cognitive computation,* 2009, vol. 1 (2), 139-159
- **A. RAHIMI ; S. DATTA ; D. KLEYKO ; E. P. FRADY ; B. OLSHAUSEN ; P. KANERVA ; J. M. RABAEY.** High-dimensional computing as a nanoscalable paradigm. *IEEE Transactions on Circuits and Systems I: Regular Papers,* 2017, vol. 64 (9), 2508-2521
- **M. SCHMUCK ; L. BENINI ; A. RAHIMI.** Hardware optimizations of dense binary hyperdimensional computing: Rematerialization of hypervectors, binarized bundling, and combinational associative memory. *J. Emerg. Technol. Comput. Syst.,* October 2019, vol. 15
- **MIKA LAIHO ; JUSSI H. POIKONEN ; PENTTI KANERVA ; EERO LEHTONEN.** High-Dimensional Computing with Sparse Vectors. *IEEE Biomedical Circuits and Systems Conference,* 2015